# EUROPÄISCHE PATENTSCHRIFT

(11) **EP 0 686 299 B1**
(45) Veröffentlichungstag und Bekanntmachung des Hinweises auf die Patenterteilung: **14.05.1997**
(21) Anmeldenummer: 94908329.9
(22) Anmeldetag: 17.02.1994
(51) Int. Cl.: G11B 15/64, G11B 15/18, G11B 15/473

(54) **VERFAHREN ZUR REIBUNGSVERRINGERUNG ZWISCHEN ROTIERENDER KOPFTROMMEL UND BANDFÖRMIGEM AUFZEICHNUNGSTRÄGER IM UMSPULBETRIEB**
PROCESS FOR REDUCING THE FRICTION BETWEEN A ROTATING HEAD DRUM AND A TAPE-SHAPED RECORDING MEDIUM DURING REWINDING
PROCEDE PERMETTANT DE REDUIRE LE FROTTEMENT ENTRE LE TAMBOUR PORTE-TETES EN ROTATION ET UN SUPPORT D'ENREGISTREMENT EN FORME DE BANDE PENDANT LE REMBOBINAGE

(30) Priorität: 26.02.1993 DE 4305927
(43) Veröffentlichungstag der Anmeldung: 13.12.1995
(73) Patentinhaber: DEUTSCHE THOMSON-BRANDT GMBH, 78048 Villingen-Schwenningen (DE)
(72) Erfinder: OLDERMANN, Klaus, D-78052 Villingen-Schwenningen (DE)
(86) Internationale Anmeldenummer: EP9400450
(87) Internationale Veröffentlichungsnummer: WO9419799

(56) Entgegenhaltungen:
- EP-A- 0 222 235
- EP-A- 0 343 252
- DE-A- 3 927 705
- DE-U- 9 116 346
- DE-U- 9 116 378
- PATENT ABSTRACTS OF JAPAN vol. 11, no. 189 (P-587) 18. Juni 1987 & JP,A,62 014 362 (MITSUBISHI ELECTRIC CORP) 22. Januar 1987
- PATENT ABSTRACTS OF JAPAN vol. 16, no. 404 (P-1410) 26. August 1992 & JP,A,04 134 661 (TOSHIBA CORP.) 8. Mai 1992
- PATENT ABSTRACTS OF JAPAN vol. 8, no. 208 (P-302) 21. September 1984 & JP,A,59 092 464 (MATSUSHITA DENKI SANGYO K.K.) 28. Mai 1984
- PATENT ABSTRACTS OF JAPAN vol. 11, no. 189 (P-587) 18. Juni 1987 & JP,A,62 014 362
- PATENT ABSTRACTS OF JAPAN vol. 16, no. 404 (P-1410) 26. August 1992 & JP,A,04 134 661
- PATENT ABSTRACTS OF JAPAN vol. 8, no. 208 (P-302) 21. September 1984 & JP,A,59 092 464

## Beschreibung

Die Erfindung geht aus von einem Verfahren gemäß dem Oberbegriff des Anspruchs 1. Zur Verkürzung der Zugriffszeit auf bandförmigen Aufzeichnungsträgern gespeicherter Informationen sind nach dem Helical-Scan-Verfahren arbeitende Aufzeichnungs- und/oder Wiedergabegeräte, wie z.B. handelsübliche Videorecorder, bekannt, bei denen der in einer Kassette auf antreibbaren Wickelkörpern gelagerte Aufzeichnungsträger auch während des Umspulbetriebes eingefädelt bleibt und dabei wie in den Recorderbetriebsarten "Play" und "Suchlauf" die Kopftrommel umschlingt. Derartige Recorder werden auch Full Loading Recorder genannt, im Unterschied zu sogenannten Half - und Non Loading Recordern, bei denen der Aufzeichnungsträger mit der Kopftrommel während des Umspulbetriebes nicht in Eingriff ist. Im Umspulbetrieb ist der Aufzeichnungsträger bei einem Half Loading Recorder zum Teil aus der Kassette ausgefädelt und bei einem Non Loading Recorder vollständig in die Kassette eingezogen. Die Kopftrommel besteht aus einem stationären Unterteil, auch untere Kopftrommel genannt, und einem zu diesem koaxial angeordneten, Aufzeichnungs- und/oder Wiedergabeköpfe aufweisenden drehbaren oberen Teil, auch obere Kopftrommel genannt.

Aufgrund des Eingefädeltseins während des Umspulbetriebes und der damit auftretenden Gleitreibung zwischen Aufzeichnungsträger und Kopftrommel sind Full Loading Recorder jedoch mit einem erhöhten Verschleißproblem von Kopf trommel und Aufzeichnungsträger behaftet. Der Umspulbetrieb "rückwärts", auch Rewind genannt, ist dabei der kritische Fall, da Aufzeichnungsträger und Kopftrommel entgegengesetzte Antriebsrichtungen aufweisen, was insbesondere gegen Ende der Umspulzeit zu einer Störung des die Gleitreibung zwischen Aufzeichnungsträger und Kopftrommel im wesentlichen bestimmenden Luftpolsters und damit zu einer Erhöhung der Gleitreibung führen kann. Besonders anfällig reagieren dabei relativ glatte Kopftrommelmantelflächen sowie Kassetten mit einem Aufzeichnungsträger relativ dünnen Materials wie z.B. eine VHS Bandkassette des Typs E300 mit einer mittleren Dicke des Aufzeichnungsträgers von 12,5 µm.

Zur Verhinderung der Gleitreibungserhöhung sind nachfolgend aufgeführte Lösungen bekannt:
a) kleinere (konstante) Umspulgeschwindigkeit im Vergleich zu Non - und Half Loading Recordern,
b) Verringern der Umspulgeschwindigkeit durch Steuerung oder Regelung der Antriebsgeschwindigkeit des Aufzeichnungsträgers in Abhängigkeit eines Stromanstiegs des Kopftrommelantriebsmotors,
c) Versehen der Mantelfläche der oberen Kopf trommel mit Drehprofilspiralen und/oder zusätzlichen Rillen und/oder einer umlaufenden Fase an dem der unteren Kpoftrommel benachbarten Ende,
d) Abschaltung des Kopftrommelantriebes mit Leerlauf bzw. Antrieb der oberen Kopftrommel durch den Aufzeichnungsträger.

Diese Lösungen haben jedoch folgende Nachteile: Bei kleinerer Umspulgeschwindigkeit gemäß a) ist die Umspulzeit größer. Die Regelung der Umspulgeschwindigkeit als Funktion des Kopftrommelmotorstromes gemäß b) erfordert einen höheren Softwareaufwand für das üblicherweise mittels eines Mikroprozessors gesteuerte Laufwerk. Bei einer Bearbeitung der Kopftrommelmantelfläche gemäß Lösung c) verteuert sich die Kopftrommelherstellung. Der Leerlaufbetrieb der Kopf trommel gemäß d) erschwert beim Umschalten das Hochlaufen der Kopftrommel bzw. des Kopftrommelantriebes, da die obere Kopftrommel wegen ihrer Umdrehung in die falsche Drehrichtung erst gestoppt und dann gegen den vom abwickelnden Wickelteller gespannt gehaltenen Aufzeichnungsträger auf Sollgeschwindigkeit beschleunigt werden muß.

Um den Verschleiß von Aufzeichnungsträger und Kopftrommel gegenüber Non - und Half Loading Recordern nicht zu erhöhen, andererseits aber der Forderung nach relativ kurzen Umspulzeiten gerecht zu werden, weisen heutige Full Loading Recorder vorzugsweise ein gezieltes Bearbeitungsprofil der oberen Kopftrommel sowie einen kräftigen Kopftrommel- und einen kräftigen Wickeltellerantrieb auf. Darüberhinaus ist eine Regelung der Umspulgeschwindigkeit des Aufzeichnungsträgers als Funktion des Kopftrommelmotorstromes vorgesehen.

Aus DE-U-91 16 346 ist das Problem der verstärketen Reibung zwischen Kopftrommel und Band bekannt, wenn im Umspulbetrieb die Umschlingung der Kopftrommel beibehalten wird. Zur Verminderung der Reibung wird eine automatische Erhöhung der Kopftrommeldrehzahl unmittelbar nach Einleiten des Umspulvorganges vorgeschlagen. Auch aus JP-A- 4-134661 und JP-A- 59 092424 ist es bekannt, die Kopftrommeldrehzahl beim Umspulen gegenüber dem Aufnahme-/Wiedergabebetrieb zu erhöhen.

Es ist Aufgabe der Erfindung, bei einem Full Loading Recorder den durch den Umspulbetrieb bedingten Aufwand zu reduzieren. Diese Aufgabe wird durch die im Anspruch 1 angegebene Erfindung gelöst. Vorteilhafte Weiterbildungen der Erfindung sind in den Unteransprüchen angegeben.

Der Erfindung liegt die Idee zugrunde, durch eine Erhöhung der Kopf trommeldrehzahl ein stabiles Luftpolster im Umschlingungsbereich zu erzeugen, um dadurch während der gesamten Umspulzeit eine konstante Gleitreibung zwischen Aufzeichnungsträger und Kopf trommel zu erreichen. Dabei werden folgende Erkenntnisse ausgenutzt: Der Anstieg der Gleitreibung ist sowohl im wesentlichen von der Dicke des Aufzeichnungsträgers und der Mantelflächenbeschaffenheit der Kopftrommel als auch von der Abnahme bzw. der betragsmäßigen Differenz zwischen den Antriebsgeschwindigkeiten von Aufzeichnungsträger und Kopf trommel abhängig. So wurde z.B. bei einem handelsüblichen Full Loading VHS-Videorecorder mit einer konstanten Kopftrommeldrehzahl von 25 Hz und einer Bandkassette des Typs E 300 festgestellt, daß es im Rewindbetrieb bei einer konstanten Drehzahl von 19 Hz des aufwickelnden Wickeltellers bereits ab der zweiten Hälfte der Gesamtumspulzeit zu einem Ansteigen der Gleitreibung kommen kann infolge von dabei einsetzender Wirbelbildung und abnehmender Luftzufuhr beim Austritt des an Geschwindigkeit zunehmenden Aufzeichnungsträgers aus dem Umschlingungsbereich.

Um ein Ansteigen der Gleitreibung zu vermeiden, wird im Prinzip lediglich die Drehzahl der Kopftrommel bzw. der rotierenden, Aufzeichnungs/Wiedergabekopfe aufweisenden oberen Kopf trommel erhöht.Es hat sich gezeigt, daß bei einem handelsüblichen VHS-Videorecorder mit Full Loading selbst bei ungünstiger (glatter) Kopftrommelmantelfläche und dünnem Band bzw. Aufzeichnungsträger praktisch kein Ansteigen der Gleitreibung mehr feststellbar ist, wenn im Rewindbetrieb die Drehzahl der Kopftrommel verdoppelt wird.

Dadurch, daß ein Ansteigen der Gleitreibung vermieden wird, verringert sich der Strombedarf von Kopftrommel- und Wickeltellerantrieb, was bei der Dimensionierung des Recordernetzteils sowie der Motoren für den Kopftrommel- und Wickeltellerantrieb kostensparend genutzt werden kann. Durch das erfindungsgemäße Verfahren ist eine Verringerung bis hin zur Ausschaltung und Verschiebung des Einflusses von Kopftrommelmantelfläche und Bandsorte auf den Anstieg der Gleitreibung möglich, so daß sich die Umspulzeit im Prinzip beliebig verkürzen läßt und/oder keine, wegen des Full Loading Verfahrens spezielle Barbeitung der Kopftrommelmantelfläche erforderlich ist.

Die Erfindung wird im folgenden anhand der Zeichnung eines Ausführungsbeispiels näher erläutert. Darin zeigen:
- Fig. 1: in schematischer Darstellung eine bekannte Kopftrommel;
- Fig. 2: eine Prinzipdarstellung eines Recorderlaufwerkes für das Helical-Scan-Verfahren mit einer Kopf trommel gemäß Fig. 1;
- Fig. 3: Diagramm zur Darstellung eines beispielhaften Bandgeschwindigkeitsverlaufs während des Umspulbetriebes;
- Fig. 4: Diagramme zur Darstellung von Motorströmen mit und ohne erfindungsgemäßer Erhöhung der Kopftrommeldrehzahl im Umspulbetrieb.

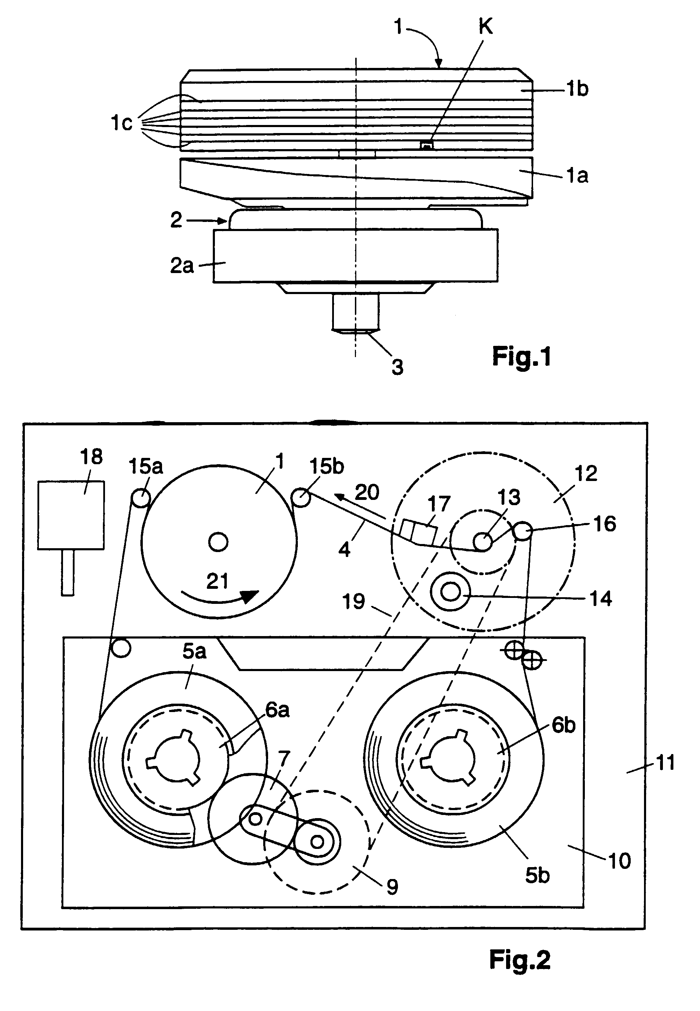

Fig. 1 zeigt die Vorderansicht einer ansich bekannten, mit einem Motor 2 eine Einheit bildende Kopftrommel 1 für einen VHS-Videorecorder. Sie umfaßt die stationäre untere Trommel 1a und die darüber, mit einem bestimmten Spalt dazwischen, koaxial angeordnete, Aufnahme- und/oder Wiedergabeköpfe K aufweisende, obere Trommel 1b, die mit dem Motorrotor 2a auf einer gemeinsamen Welle 3 befestigt ist. An der Umfangsfläche der oberen Kopftrommel 1b sind mehrere, vorzugsweise fünf umlaufende Nuten lc vorgesehen. Diese dienen zur Luftzufuhr für die Bildung eines Luftpolsters zwischen der Kopf trommel 1 und einem diese umschlingenden Aufzeichnungsträger, im folgenden Band 4 genannt (Fig. 2). Die Nuten 1c liegen in einer Ebene senkrecht zur Welle 3 und haben einen bestimmten Abstand voneinander.

Fig. 2 zeigt in einer schematischen Darstellung ein Laufwerk eines VHS-Videorecorders mit einer Kopftrommel gemäß Fig. 1. Dargestellt ist der Wickel- und Bandantrieb für eine Bandkassette 10, die auf einem Laufwerkchassis 11 gelagert ist. Das der Aufzeichnung und/oder Wiedergabe dienende Band 4 ist durch einen Fädelmotor 18 über Fädelelemente 15a, 15b und 16 mittels nicht dargestellter Führungen aus der Kassette 10 herausgeführt und um die Kopf trommel 1 gelegt. Außerhalb der Kassette 10 ist ein Capstanmotor 12 angeordnet, mit dessen Welle 13 im Zusammenwirken mit einer Gummiandruckrolle 14 das Band 4 für den Spielbetrieb (einschließlich Sonderbetriebsarten) antreibbar ist. Zwischen Fädelelement 15b und Welle 13 wird das Band 4 an dem ansich bekannten ortsfesten ACE-Kopf 17 für die Aufzeichnung und Wiedergabe von Synchron- und Audiosignalen vorbeigeführt.

Zugleich dient der Capstanmotor 12 zum Antrieb von mit den Bandwickeln 5a; 5b in Eingriff stehenden Wickeltellern 6a; 6b. Der Antrieb erfolgt über ein aus einem Gummiriemen 19, einem Planetengetriebe 9 und einem Schwenkrad 7 bestehenden Getriebe. Eine Wickeltellerdrehzahlerhöhung für den Umspulbetrieb erfolgt dabei durch Kurzschließen des Planetengetriebes 9. Die Bandlaufrichtung für den Umspulbetrieb "rückwärts" bzw. Rewind ist durch einen Pfeil 20 dargestellt. Die Drehrichtung der Kopf trommel 1, sowohl im Spiel - als auch im Umspulbetrieb, ist durch einen Pfeil 21 dargestellt. Ein derartiger Wickel- und Bandantrieb für eine Bandkassette ist aus der WO 90/12397 bekannt.

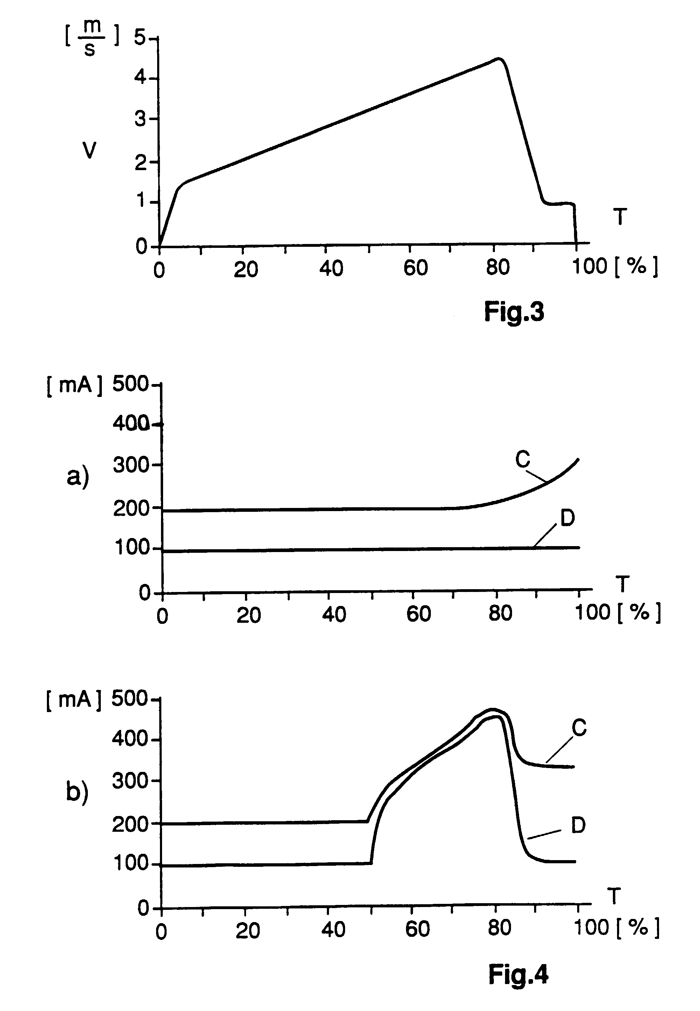

Fig. 3 zeigt anhand eines Ablaufdiagramms beispielhaft den Bandgeschwindigkeitsverlauf während einer kompletten Umspulung des der Aufzeichnung und/oder Wiedergabe dienenden Bandes 4 von einem Wickelkörper auf den anderen Wickelkörper einer Bandkassette 10 mit einem Laufwerk gemäß Fig. 2.

Auf der Ordinate ist die Bandgeschwindigkeit V in Meter pro Sekunde aufgetragen, während auf der Abzisse die Umspulzeit T in Prozent angegeben ist, wobei 100% einer kompletten Bandumspulung entspricht.

Bei einer VHS-Bandkassette 10 mit einem Durchmesser der Bandwickelkörper von etwa 26 mm beträgt beim Erreichen einer konstanten Drehzahl von vorzugsweise 19 Hz des angetriebenen Wickeltellers, z.B. Wickelteller 6a bei Rewind, die Bandgeschwindigkeit etwa 1,5 m pro Sekunde. Bei weiter konstant gehaltener Drehzahl des ziehenden Wickeltellers nimmt, wie dargestellt, die Bandgeschwindigkeit aufgrund größer werdenden Bandwickels kontinuierlich zu und würde am Ende der Umspulung sogar die Umdrehungsgeschwindkeit der rotierenden Köpfe K von etwa 4,9 m pro Sekunde betragsmäßig erreichen, wenn nicht, vorzugsweise bei etwa 80% der Gesamtumspulzeit, die Drehzahl des ziehenden Wickeltellers reduziert werden würde, um u.a. Band und Kassette sowie Wickelantrieb vor Beschädigung zu schützen.

Die Reduzierung der Drehzahl des ziehenden Wickeltellers durch eine entsprechende Steuerung des Motors 12 erfolgt durch einen nicht dargestellten Mikroprozessor, wie er heute üblicherweise zur Ablaufsteuerung der Laufwerkmechanik sowie zur Steuerung und/oder Reglung des Wickelteller-, Band- und Kopftrommelantriebes verwendet wird.

Die Diagramme a) und b) gemäß Fig. 4 zeigen beispielhaft den jeweiligen Strom C; D bei Rewind einer beliebigen VHS-Kassette 10 in dem, den Wickelteller 6a mit einer Drehzahl von vorzugsweise 19 Hz antreibenden Motor 12 und in dem, die obere Kopftrommel 1b antreibenden Motor 2, wobei im Diagramm a) die Motorströme C und D in dem Recorder mit dem erfindungsgemäßen Verfahren und im Diagramm b) die Motorströme C und D in demselben Recorder dargestellt sind, wenn keine Erhöhung der Kopftrommeldrehzahl zur Vermeidung des Gleitreibungsanstieges bei Rewind vorgesehen ist.

Auf der Ordinate beider Diagramm a) und b) ist der Motorstrom in Milliampere angegeben, während auf der Abzisse die Umspulzeit T in Prozent der Gesamtumspulzeit angegeben ist. Wie in Diagramm a) dargestellt ist, ist, im Unterschied zu Diagramm b), kein Anstieg des Motorstroms D der Kopf trommel 1 feststellbar, was auf einer konstanten Gleitreibung infolge einer stabilen Luftschicht bzw. Luftpolsters zwischen Band 4 und Kopf trommel 1 beruht. Der Betrag des Motorstromes D entspricht dabei dem Strombetrag des Kopftrommelmotors 2 im Leerlaufbetrieb. Der Verlauf beider Motorströme C und D gemäß Diagramm a) gilt sowohl für den Umspulbetrieb "Rückwärts" als auch für den Umspulbetrieb "Vorwärts". Der Anstieg des Motorstroms C am Ende der Umspulung beruht dabei nicht auf einem Anstieg der Gleitreibung zwischen Band 4 und Kopftrommel 1, sondern darauf, daß bei konstanter Drehzahl des ziehenden Wickeltellers und bei konstantem Grundreibmoment des gezogenen Wickeltellers der Bandzug, gegen den der Motor 12 arbeiten muß, an diesem Wickelteller infolge abnehmenden Bandwickelradius' größer wird. Der Darstellung des Verlaufs der Motorströme C und D gemäß Diagramm b) entspricht die Verwendung einer VHS-Kassette vom Typ E300.

Anstelle einer Erhöhung der Kopftrommeldrehzahl von 25 Hz auf 50 Hz für den Umspulbetrieb, insbesondere für Rewind, ist es auch denkbar, die Drehzahl der Kopftrommel 1 bzw. ihres oberen Teils 1b nur dann zu erhöhen, wenn eine Erhöhung der Gleitreibung festgestellt wird, z.B. durch eine ständige Auswertung des Motorstromes D des Kopftrommelmotors 2 und/oder des den Wickelteller antreibenden Motors 12. Die Auswertung und entsprechende Steuerung der Kopftrommeldrehzahl kann z.B. mit dem bereits erwähnten Mikroprozessor erfolgen.

Die Erfindung ist keineswegs nur für Recorder mit einer Kopftrommel zur Aufzeichnung und/oder Wiedergabe von Signalen nach dem Helical-Scan-Verfahren geeignet. Auch ist die Erfindung nicht auf Recorder mit einer Aufzeichnungsträgerumschlingung der Kopftrommel von 180° beschränkt.

## Patentansprüche

1. Verfahren zur Verminderung der Reibung zwischen der Kopftrommel (1) und einem bandförmigen, die Kopftrommel (1) umschlingenden Aufzeichnungsträger (4) bei einem Recorder zur Aufzeichnung und/oder Wiedergabe von Signalen, **dadurch gekennzeichnet**, daß im Umspulbetrieb die Drehzahl der Kopftrommel (1) in Abhängigkeit vom Ergebnis einer Auswertung des Stromes (D) des Kopftrommelmotors (2) und/oder des die Wickelteller (6a, 6b) antreibenden Motors erhöht wird.

2. Recorder mit einer Aufnahme und/oder Wiedergabeköpfe (K) aufweisenden Kopftrommel (1) zur Aufzeichnung und/oder Wiedergabe von Signalen mit einem bandförmigen Aufzeichnungsträger (4), **dadurch gekennzeichnet**, daß Mittel zur Steuerung der Kopftrommeldrehzahl vorgesehen sind, durch die in Abhängigkeit vom Ergebnis einer Auswertung des Stromes (D) des Kopftrommelmotors (2) und/oder des die Wickelteller (6a, 6b) antreibenden Motors (12) im Umspulbetrieb "Rückwärts" und/oder "Vorwärts" die Kopftrommelumdrehung gegenüber dem Play-Betrieb auf eine höhere, konstante oder auf eine höhere, vom Strom des Kopftrommelmotors (2) und/oder des die Wickelteller (6a, 6b) antreibenden Motors (12) abhängige Drehzahl gesteuert wird.

## Claims

1. Method for reducing the friction between the head drum (1) and a tape-like recording medium (4) wrapped around the head drum (1) in a recorder for the recording and/or reproduction of signals, characterised in that, the rotational speed of the head drum (1) is increased in the fast-wind mode in dependence on the result of an evaluation of the current (D) through the head drum motor (2) and/or of that through the motor (12) driving the spool-spindles (6a, 6b).

2. Recorder including a head drum (1) having recording and/or reproduction heads (K) for the recording and/or reproduction of signals using a tape-like recording medium (4), characterised in that, there are provided means for the control of the rotational speed of the head drum by means of which, and in dependence on the result of an evaluation of the current (D) through the head drum motor (2) and/or of that through the motor (12) driving the spool-spindles (6a, 6b), in the fast-wind mode, "reverse" and/or "forwards", the rotation of the head drum is adjusted, relative to the play mode, to a higher, constant rotational speed or to a higher rotational speed that is dependent on the current through the head drum motor (2) and/or of that through the motor (12) driving the spool-spindles (6a, 6b).

## Revendications

1. Procédé permettant de réduire le frottement entre le tambour porte-têtes (1) et un support d'enregistrement en forme de bande (4) enroulé autour du tambour porte-têtes (1) d'un magnétoscope destiné à l'enregistrement et la lecture de signaux, caractérisé en ce que pendant le rembobinage, la vitesse de rotation du tambour porte-têtes (1) peut être augmentée en fonction de l'évaluation du courant (D) du moteur (2) du tambour porte-têtes et/ou du moteur d'entraînement du plateau d'enroulement (6a, 6b).

2. Magnétoscope avec tambour porte-têtes (1) muni de têtes d'enregistrement et de lecture (k), destiné à l'enregistrement et la lecture de signaux sur un support d'enregistrement en forme de bande (4), caractérisé en ce que des moyens de commande de la vitesse de rotation du tambour porte-têtes sont prévus. Ces moyens permettent, en mode de rembobinage "arrière" et "avant, d'accélérer la rotation du tambour porte-têtes et de l'amener à une vitesse supérieure et constante ou à une vitesse supérieure à celle du mode lecture en fonction de l'évaluation du courant (D) du moteur (2) du tambour porte-têtes et/ou du moteur d'entraînement (12) du plateau d'enroulement (6a, 6b).
